# EUROPÄISCHE PATENTSCHRIFT

(11) **EP 2 693 230 B1**
(45) Veröffentlichungstag und Bekanntmachung des Hinweises auf die Patenterteilung: **05.10.2016**
(21) Anmeldenummer: 13003111.5
(22) Anmeldetag: 19.06.2013
(51) Int. Cl.: G01S 7/00, G01S 13/93

(54) **Radarsensor für ein Kraftfahrzeug, Kraftfahrzeug und Kommunikationsverfahren**
Radar sensor for a motor vehicle, motor vehicle and communication method
Capteur radar pour un véhicule automobile, véhicule automobile et procédé de communication

(30) Priorität: 01.08.2012 DE 102012015250
(43) Veröffentlichungstag der Anmeldung: 05.02.2014
(73) Patentinhaber: AUDI AG, 85045 Ingolstadt (DE)
(72) Erfinder: Khlifi, Rachid, 85748 Garching (DE)
(74) Vertreter: Thielmann, Frank

(56) Entgegenhaltungen:
- WO-A1-2012/037680
- US-A1- 2012 032 833

## Beschreibung

Die Erfindung betrifft einen Radarsensor für ein Kraftfahrzeug, umfassend wenigstens eine Antennenanordnung zum Senden und Empfangen von Radarsignalen und eine zur Steuerung des Betriebs der Antennenanordnung und zur Auswertung der empfangenen Radarsignale ausgebildete Steuereinrichtung. Daneben betrifft die Erfindung ein Kraftfahrzeug und ein Kommunikationsverfahren.

Radarsensoren sind im Stand der Technik bereits weitgehend bekannt, auch im Einsatz in Kraftfahrzeugen. Dabei werden Radarsignale ausgesendet und reflektierte Radarsignale von meist dedizierten Antennen einer Antennenanordnung wieder empfangen, so dass diese über eine Auswertungslogik, die in Form einer Steuereinrichtung in dem Radarsensor selbst vorgesehen sein kann, ausgewertet werden können, beispielsweise, um durch Betrachtung von Frequenz- und Phasenunterschieden andere Objekte im Erfassungsbereich des Radarsensors sowie deren Geschwindigkeit zu detektieren. Auch weitere Auswertungsmöglichkeiten sind denkbar, insbesondere bezüglich einer Auswertung eines Gefahrenrisikos, beispielsweise eines Kollisionsrisikos, so dass auch unmittelbar von dem Radarsensor aus Sicherheitssysteme des Kraftfahrzeugs angesteuert werden können.

Sicherheitssysteme, insbesondere Kollisionsvermeidungssysteme, wurden im Stand der Technik bereits vorgeschlagen. Meist steht hierbei das Fahrzeug, welches das Sicherheitssystem aufweist, im Mittelpunkt der Betrachtungen, während weitere Verkehrsteilnehmer, die ebenso beteiligt sind, bei kritischen Verkehrssituationen weniger im Fahrgeschehen involviert werden. Gerade jedoch in sehr kritischen Situationen kann, wenn alle beteiligten Verkehrsteilnehmer über die Gefahr informiert bzw. vor ihr gewarnt werden, die Kollisionswahrscheinlichkeit drastisch reduziert werden. In diesem Zusammenhang wurde vorgeschlagen, Kraftfahrzeug-zu-Kraftfahrzeug-Kommunikation (car2car-Kommunikation bzw. c2c-Kommunikation) zu nutzen, um beispielsweise Gefahreninformationen oder sonstige Daten austauschen zu können.

Sicherheitssysteme, insbesondere Kollisionsvermeidungssysteme, nutzen häufig Radarsensoren, um das Umfeld zu überwachen und hieraus beispielsweise Kollisionswahrscheinlichkeiten und dergleichen abzuleiten. Detektiert nun beispielsweise ein Radarsensor eines ersten Kraftfahrzeugs ein zweites Kraftfahrzeug in einer kritischen Verkehrssituation, so wird das zweite Kraftfahrzeug durch den Sensor zunächst eine Zeit lang nachverfolgt. Sobald das zweite Kraftfahrzeug kritisch wird, beispielsweise eine Kollisionswahrscheinlichkeitsschwelle überschritten wird, ist es denkbar, das zweite Kraftfahrzeug über Fahrzeug-zu-Fahrzeug-Kommunikation zu informieren. Hierzu wird eine entsprechende Nachricht von dem Radarsensor an ein Bussystem des ersten Kraftfahrzeugs gegeben, welches zum einen die Warnung und/oder Auslösung von Fahreingriffen im ersten Kraftfahrzeug bewirken kann, zum anderen aber auch eine Kommunikationseinrichtung für die Fahrzeug-zu-Fahrzeug-Kommunikation erreicht. Dort werden die Informationen in eine Nachricht umgesetzt, welche an das zweite Kraftfahrzeug gesendet wird. Das zweite Kraftfahrzeug empfängt die Gefahreninformationen seinerseits über eine Kommunikationseinrichtung, bereitet sie geeignet auf und überträgt sie an das eigene Bussystem, welches entsprechend Warnungen und/oder Fahreingriffe auslösen kann.

Während in kritischen Situationen die Zeitfenster bis zu einer Kollision meist sehr klein sind, dauert es bei dem beschriebenen Vorgehen ersichtlich äußerst lange, bis die Aktuatorik oder der Fahrer des zweiten Kraftfahrzeugs reagieren kann, so dass ein Unfall fast unvermeidbar sein kann. Durch die Detektion, Verarbeitung und Übertragung können wertvolle Sekunden vergehen, die entscheidend für eine Kollisionsvermeidung wären. Ein weiterer Nachteil der bekannten Lösung ist der Hardware-Aufwand, der zudem kostenintensiv ist.

US 2012/032833 A1 betrifft Radarsysteme zur Überwachung eines größeren Gebiets, insbesondere Objektdetektionssysteme. Die kompakten Radarsensoren bilden ein Netzwerk von Radarknoten, die eine vorzeitige Warnung vor Eindringlingen liefern können. Dabei besteht das Problem, dass Radiosignale (zum Datenaustausch) und Radarsignale miteinander interferieren könnten. Mithin wird vorgeschlagen, dass die Radarsensoren untereinander einen Plan von Radioereignissen austauschen, so dass ein Planungsmanager Radarereignisse zu Zeitpunkten planen kann, in denen von keiner Seite, die interferieren könnte, eine Radioübertragung durchgeführt werden soll. Die auch als Radioantenne nutzbare Radarantenne kann beispielsweise in einem Baum angeordnet werden.

WO 2012/037680 A1 betrifft ein Radarsystem mit integrierter Kommunikationsfunktionalität, das auch in zukünftigen intelligenten Fahrzeugen angewendet werden soll. Dort wird festgestellt, dass die kombinierte Sensor- und Kommunikationsfunktionalität unabdingbar für die Entwicklung zukünftiger Radarsysteme sei. Die konkrete, dort geäußerte Idee ist es nun, dass wenigstens die Anteile des Radarsignals, die die steigenden und fallenden Flanken der Wellenform des Radarsignals betreffen, als Radarzyklus verwendet werden, während ein Konstantfrequenzanteil des Radarsignals mit einem Datensignal moduliert wird. Mithin folgen in der Zeitdomäne der Radarzyklus und der Radiozyklus sequentiell aufeinander, wobei die Datenübertragung durch Aufmodulation auf das Radarsignal erfolgt.

Der Erfindung liegt daher die Aufgabe zugrunde, eine Möglichkeit anzugeben, Daten, insbesondere Gefahreninformationen, schneller an ein weiteres Kraftfahrzeug zur Verfügung stellen zu können, wobei zudem der Hardware- und Kostenaufwand reduziert wird.

Zur Lösung dieser Aufgabe ist erfindungsgemäß ein Radarsensor mit den Merkmalen des Anspruchs 1 vorgesehen.

Erfindungsgemäß wird also vorgeschlagen, die Radarsensorik und die Kraftfahrzeug-zu-Kraftfahrzeug-Kommunikation in einer einzigen Vorrichtung unter Nutzung derselben Antennenanordnung zu kombinieren, so dass der erfindungsgemäße Radarsensor zusätzlich auch als eine Kommunikationseinrichtung wirken kann. Auf diese Weise können Latenzzeiten, die durch die Übertragung im Bussystem des Kraftfahrzeugs und die Verarbeitung in einer externen Kommunikationsvorrichtung entstehen würden, deutlich reduziert werden, wobei sich zusätzlich Kostenvorteile bzw. Vorteile im Hardwareaufwand ergeben, nachdem eine Realisierung im selben Gerät möglich ist. Nachdem der Radarsensor selbst bereits eine Steuereinrichtung aufweist, muss lediglich diese um eine entsprechende Funktionalität ergänzt werden, wobei dabei auch Signalaufbereitungsvorrichtungen für die Kraftfahrzeug-zu-Kraftfahrzeug-Kommunikation hinzugefügt werden können.

Mit der erfindungsgemäßen Lösung bietet sich der große Vorteil, dass gefährdete weitere Verkehrsteilnehmer praktisch in Echtzeit über die festgestellte kritische Verkehrsinformation informiert bzw. gewarnt werden können. Hierdurch kann insbesondere im Hinblick auf Kollisionsvermeidungssysteme die Kollisionswahrscheinlichkeit, beispielsweise durch Bremsen oder Ausweichen, deutlich reduziert werden. Dabei sei bereits an dieser Stelle darauf hingewiesen, dass die vorliegende Erfindung auch dann bereits Vorteile bringt, wenn der Radarsensor des die Nachricht empfangenden weiteren Kraftfahrzeugs nicht erfindungsgemäß ausgebildet ist, sondern der Empfang über eine dedizierte Kraftfahrzeug-zu-Kraftfahrzeug-Kommunikationseinrichtung des weiteren Kraftfahrzeugs erfolgt. Denn in jedem Fall wird der Übertragungs- und Verarbeitungsweg außerhalb des Radarsensors im ersten, sendenden Kraftfahrzeug vermieden.

Die Steuereinrichtung kann insbesondere einen digitalen Signalprozessor (DSP) umfassen, auf dem neben Auswertungsalgorithmen zur Verarbeitung der aus den Radarsignalen gewonnenen Daten auch entsprechende Algorithmen zur Erzeugung zu versendender Nachrichten realisiert werden können.

Es ist, wie bereits dargelegt wurde, besonders zweckmäßig, wenn die Steuereinrichtung zum Senden von Auswertungsdaten wenigstens als Teil einer Nachricht ausgebildet ist. Das bedeutet, aus den Radarsignalen gewonnene Auswertungsdaten können unmittelbar, d. h. ohne Beteiligung weiterer Fahrzeugsysteme/Steuergeräte, über die Kraftfahrzeug-zu-Kraftfahrzeug-Kommunikation auch an ein anderes Kraftfahrzeug übertragen werden. So kann beispielsweise ein Kraftfahrzeug, dessen eigene Fahrzeugsysteme eine Gefahr noch nicht erkannt haben, durch Berücksichtigung der als Teil der Nachricht verschickten Auswertungsdaten über ein Kollisionsrisiko oder dergleichen frühzeitig und insbesondere auch gezielt informiert werden. In besonders bevorzugter Ausgestaltung der Erfindung kann vorgesehen sein, dass die Steuereinrichtung zum insbesondere gezielten Senden von Auswertungsdaten und/oder weiteren Daten, insbesondere wenigstens eine Größenangabe des eigenen Kraftfahrzeugs betreffenden Daten, an ein insbesondere durch den Radarsensor detektiertes, von den Auswertungsdaten betroffenes weiteres Kraftfahrzeug ausgebildet ist.

Erfindungsgemäß wurde erkannt, dass es letztlich sogar von Vorteil sein kann, dass die Antennenanordnung des Radarsensors zum gerichteten Senden ausgebildet ist, nachdem dann gezielt im Detektionsbereich des Radarsensors befindliche andere Verkehrsteilnehmer über die Kraftfahrzeug-zu-Kraftfahrzeug-Kommunikation angesprochen werden können. Mit anderen Worten bedeutet dies, dass über den erfindungsgemäßen Radarsensor nach richten der Kraftfahrzeug-zu-Kraftfahrzeug-Information gerichtet versendet oder empfangen werden können. Es wird darauf hingewiesen, dass beim gerichteten Aussenden der Nachricht auch ein nicht mit erfindungsgemäßen Radarsensoren ausgestattetes Kraftfahrzeug die Nachrichten über eine übliche Kraftfahrzeug-zu-Kraftfahrzeug-Kommunikationseinrichtung, welche beispielsweise eine Dachantenne aufweisen kann, empfangen kann.

Ein weiterer hier angesprochener Vorteil der vorliegenden Erfindung ist, insbesondere dann, wenn zwei Kraftfahrzeuge mit den erfindungsgemäßen Radarsensoren ausgestattet sind und kommunizieren, dass neben den Auswertungsdaten auch weitere Daten sinnvoll verschickt werden können, insbesondere solche, die die Detektion bzw. Datenauswertung in dem empfangenden Kraftfahrzeug verbessern. So hat beispielsweise die Radardetektion den Nachteil, dass keine Ausdehnung von Objekten gemessen werden kann. Durch die Kraftfahrzeug-zu-Kraftfahrzeug-Kommunikation ist es nun auch möglich, Fremd-Fahrzeugdaten, insbesondere die Länge, die Breite, die Höhe und dergleichen, direkt am Radarsensor zu empfangen und somit die Zuverlässigkeit der Radar-Technologie zu steigern und den Auswertungsvorgang bezüglich des anderen Objekts zu verbessern.

Es sei an dieser Stelle angemerkt, dass zum Aussenden der Nachrichten selbstverständlich ein Kraftfahrzeug-zu-Kraftfahrzeug-Kommunikationsstandard verwendet wird, der sicherstellt, dass andere Kraftfahrzeuge Nachrichten auch empfangen können.

Wie bereits erwähnt wurde, wird im erfindungsgemäßen Radarsensor, in den auch eine Kraftfahrzeug-zu-Kraftfahrzeug-Kommunikationseinrichtung integriert ist, durch beide Funktionalitäten, also Radar und Kommunikation, die selbe Antennenanordnung genutzt. Die vorliegenden Erfinder haben erkannt, dass dies möglich ist, sobald kein zu breiter Frequenzbereich durch die Antennen der Antennenanordnung abgedeckt werden muss. Nachdem nun aber Radartechnologien wie auch Kraftfahrzeug-zu-Kraftfahrzeug-Standardkommunikationsfrequenzbänder im Bereich von etwa 6 GHz bekannt wurden, ist es mithin möglich, Radarsensorik und insbesondere auf WLAN basierende Kraftfahrzeug-zu-Kraftfahrzeug-Kommunikation zu realisieren.

Daher ist erfindungsgemäß mithin vorgesehen, dass die Antennenanordnung zum Senden und/oder Empfangen in einem Frequenzbereich ausgelegt ist, der ein Radarfrequenzband und ein benachbartes und/oder teilweise überlappendes Kommunikationsfrequenzband umfasst. Dabei ist es zweckmäßig, die Überlappung gering zu halten, so dass erfindungsgemäß vorgesehen ist, dass eine Überlappung zwischen dem Radarfrequenzband und dem Kommunikationsfrequenzband weniger als 20 % der Breite des Radarfrequenzbands und/oder weniger als 40 % der Breite des Kommunikationsfrequenzbandes beträgt. Als geeigneter Frequenzbereich hat sich, nachdem dort bereits ein Kommunikationsstandard für die Kraftfahrzeug-zu-Kraftfahrzeug-Kommunikation existiert, der Frequenzbereich zwischen 5.700 MHz und 6.000 MHz erwiesen.

So kann in einer konkreten Ausgestaltung beispielsweise vorgesehen sein, dass das vom Radar genutzte Radarfrequenzband von 5.725 MHz bis 5.875 MHz läuft. Ein für die Kraftfahrzeug-zu-Kraftfahrzeug-Kommunikation genutztes Frequenzband kann zwischen 5.850 MHz und 5.920 MHz liegen. Diese benachbarten Frequenzbänder ermöglichen es, den erfindungsgemäßen Radarsensor vorteilhaft zu realisieren, nachdem im hier dargestellten Beispielfall Antennen der Antennenordnung ausreichend sind, die eine Bandbreite von 195 MHz aufweisen. Dabei ist die Antennenanordnung zweckmäßig als ein Patchantennen-Array ausgebildet, im Englischen häufig auch als "micro strip patch array antenna" bezeichnet.

In weiterer vorteilhafter Ausgestaltung kann vorgesehen sein, dass die Antennenanordnung wenigstens eine Sendeantenne und wenigstens eine Empfangsantenne aufweist, wobei die Sendeantenne insbesondere im zyklischen Wechsel mit dem Aussenden von Radarsignalen zum Aussenden von Nachrichten ansteuerbar ist und/oder der zum Empfang von Radarsignalen und Nachrichten ausgebildete Empfangsantenne wenigstens eine Filtereinheit zum Trennen von Radarsignalen und Nachrichten nachgeschaltet ist. Wie bei bekannten Radarsystemen kann auch der erfindungsgemäße Radarsensor mehrere Sendeantennen (Transmitter-Antennen) und mehrere Empfangsantennen (Receiver-Antennen) aufweisen, beispielsweise zwei Sendeantennen und vier Empfangsantennen. Die Sendeantenne sendet die Radarsignale aus, während die Empfangsantenne die reflektierten Radarsignale (Radarechos) empfängt. Wie grundsätzlich bekannt, kann durch die Steuereinrichtung, insbesondere einen digitalen Signalprozessor, nun durch die Dopplerverschiebung bzw. Phasenverschiebung der Abstand, Winkel und die relative Geschwindigkeit zu einem Objekt ermittelt werden. Besonders vorteilhaft ist es im Rahmen der vorliegenden Erfindung, wenn die Sendeantenne zyklisch die Radarsignale und die Nachrichten nacheinander sendet. Nachdem die Zyklus-Zeit von Radarsystemen beispielsweise 50 ms betragen kann, die von Kraftfahrzeug-zu-Kraftfahrzeug-Kommunikation bei etwa 150 ms liegen kann, ist eine geeignete, durch die Steuereinrichtung vorgenommene Synchronisierung zwischen dem Radarbetrieb und dem Kommunikationsbetrieb möglich.

Die wenigstens eine Empfangsantenne ist immer aktiv und empfängt ständig Radarsignale und/oder Nachrichten. Durch eine entsprechende Filtereinheit ist es möglich, insbesondere bei keiner oder nur geringer Überlappung des Kommunikationsfrequenzbandes und des Radarfrequenzbandes, eine Trennung vorzunehmen, so dass dann eine getrennte Verarbeitung für Nachrichten und Radarsignale vorgenommen werden kann. Eine geeignete Filtereinheit kann beispielsweise als ein Bandpassfilter realisiert werden.

In besonders vorteilhafter Ausgestaltung der vorliegenden Erfindung kann ferner vorgesehen sein, dass die Steuereinrichtung zur Berücksichtigung von über den Radarsensor oder eine externe Kommunikationseinrichtung im Rahmen einer Nachricht empfangenen Auswertungsdaten und/oder weiteren Daten bei der Auswertung von Radardaten ausgebildet ist. Das bedeutet, insbesondere im Radarsensor selbst empfangene Nachrichten können auch bei der Auswertung von Radarsignalen nützliche Daten enthalten, welche dann entsprechend berücksichtigt werden können. Auf diese Weise kann die Dynamik der Radarsensoren immens gesteigert werden, denn es können beispielsweise Trackingalgorithmen durch die Auswertungsdaten und/oder weiteren Daten stark beschleunigt werden und/oder die Fehlerdetektionsrate kann durch die Fusion stark reduziert werden, so dass die Zuverlässigkeit der sicherheitsrelevanten Systeme stark gesteigert wird.

In einem konkreten Anwendungsfall kann beispielsweise vorgesehen sein, dass die Zahl der für eine erste Detektion notwendigen Radarzyklen in Abhängigkeit empfangener Auswertungsdaten und/oder weiterer Daten reduziert wird. Üblicherweise benötigen Radarsysteme bei Erstdetektion mehrere Radarzyklen, bis ein Objekt als detektiert gilt. Eine derartige Spätdetektion kann in kritischen Verkehrssituationen ungünstig sein. Werden allerdings im Rahmen der Kraftfahrzeug-zu-Kraftfahrzeug-Kommunikation insbesondere direkt von einem anderen Radarsensor eines weiteren Kraftfahrzeugs zur Verfügung gestellte Daten mitberücksichtigt, kann schon beim ersten Radarmesszyklus gemeinsam mit einer über die Kraftfahrzeug-zu-Kraftfahrzeug-Kommunikation empfangenen Informationen eine deutlich frühere Plausibilisierung eines Objekts, insbesondere schon im ersten Radarmesszyklus, realisiert werden, so dass beispielsweise bereits bei einer Erstdetektion eine Auslösung der Warnung erfolgen kann. Eine weitere Verbesserung der durch die Steuereinrichtung vorgenommenen Auswertung von Radarsignalen kann erzielt werden, wenn, wie oben bereits erläutert, als Teil einer Nachricht auch Fremd-Fahrzeugdaten wie Länge, Breite, Höhe und dergleichen eines anderen Kraftfahrzeugs mitübersandt werden und als weitere Daten berücksichtigt werden.

Neben dem Radarsensor betrifft die Erfindung auch ein Kraftfahrzeug, aufweisend wenigstens einen Radarsensor der erfindungsgemäßen Art. Sämtliche Ausführungen bezüglich des Radarsensors lassen sich analog auf das erfindungsgemäße Kraftfahrzeug übertragen, mit welchem mithin auch die genannten Vorteile erhalten werden können. Dabei sei an dieser Stelle angemerkt, dass es selbstverständlich grundsätzlich denkbar ist, dass das Kraftfahrzeug zusätzlich noch eine dedizierte Kraftfahrzeug-zu-Kraftfahrzeug-Kommunikationseinrichtung zusätzlich zu dem wenigstens einen Radarsensor aufweist.

In einer besonders vorteilhaften Ausführungsform der vorliegenden Erfindung ist jedoch vorgesehen, dass mehrere, das gesamte Umfeld des Kraftfahrzeugs abdeckende Radarsensoren vorgesehen sind. Das bedeutet, das Kraftfahrzeug weist hinreichend viele Radarsensoren auf, um eine einheitliche 360°-Radarsicht zu ermöglichen, so dass trotz des gerichteten Aussendens der Nachrichten über den Radarsensor bzw. dessen Antennenanordnung eine Kraftfahrzeug-zu-Kraftfahrzeug-Kommunikation in alle Richtungen realisiert werden kann. Dabei sei an dieser Stelle nochmals hervorgehoben, dass gerade in einem solchen Fall, bei dem eine 360°-Radarsicht vorliegt, es von Vorteil ist, dass über die Radarsensoren Nachrichten auch gerichtet gesendet und empfangen werden, so dass beispielsweise dann, wenn eine Kollision vermieden werden soll, gezielt der Radarsensor, in dessen Erfassungsbereich sich das mögliche Kollisionsobjekt oder ein anderer betroffener Verkehrsteilnehmer befindet, eine entsprechende Nachricht aussendet.

Eine entsprechende, wiederholt erwähnte Kollisionsvermeidungs-Funktionalität, die zu großem Teil durch die Steuereinrichtung des wenigstens einen Radarsensors realisiert wird, kann dabei Teil eines Kollisionsvermeidungssystems und/oder sonstigem Sicherheitssystem des Kraftfahrzeugs sein.

Schließlich betrifft die Erfindung auch ein Verfahren zur Kommunikation zwischen einem Kraftfahrzeug und wenigstens einem weiteren Verkehrsteilnehmer, welches sich durch die Merkmale des Anspruchs 9 auszeichnet. Hierbei kann bevorzugt der erfindungsgemäße Radarsensor eingesetzt werden, so dass sich insbesondere alle dortigen Ausführungen auch auf das erfindungsgemäße Verfahren übertragen lassen. Auch im erfindungsgemäßen Verfahren wird die bereits zum Senden und Empfangen von Radarsignalen genutzte Antennenanordnung mithin eingesetzt, um Nachrichten der Kraftfahrzeug-zu-Kraftfahrzeug-Kommunikation zu senden und/oder zu empfangen, bevorzugt beides.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Radarsensors,
- Fig. 2: eine mögliche relative Lage von Frequenzbändern,
- Fig. 3: eine Zeichnung zum Betrieb von Sendeantennen der Antennenanordnung, und
- Fig. 4: ein erfindungsgemäßes Kraftfahrzeug.

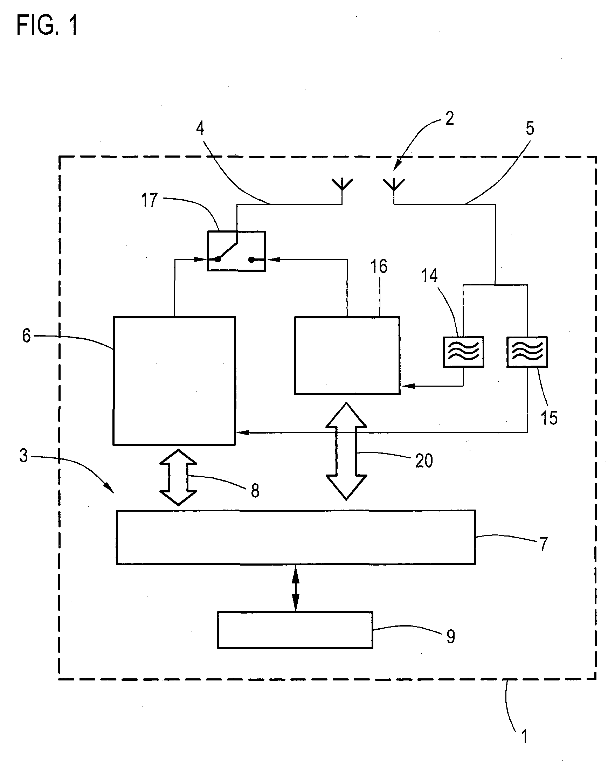

Fig. 1 zeigt eine Prinzipskizze eines erfindungsgemäßen Radarsensors 1, der auch als Kommunikationseinrichtung für die Kraftfahrzeug-zu-Kraftfahrzeug-Kommunikation eingesetzt werden kann, nachdem die verwendete Antennenanordnung 2 sowohl zum Senden und Empfangen von Radarsignalen als auch zum Senden und Empfangen von Nachrichten im Rahmen der Kraftfahrzeug-zu-Kraftfahrzeug-Kommunikation von einer Steuereinrichtung 3 angesteuert werden kann.

Dabei sei an dieser Stelle noch angemerkt, dass für die vorliegende Erfindung unwesentliche Komponenten des Radarsensors 1 der Übersichtlichkeit halber nicht gezeigt sind, beispielsweise den Antennen der Antennenanordnung 2 noch unmittelbar vorgeschaltete Filterstufen und ein LNA auf der Empfangsseite.

Der Radarsensor weist als Teil der Antennenanordnung mehrere Antennen 4, 5 auf, darunter wenigstens eine Sendeantenne 4 und wenigstens eine Empfangsantenne 5. Auch wenn in Fig. 1 der Übersichtlichkeit halber nur jeweils eine Antenne 4 und eine Antenne 5 dargestellt sind, können selbstverständlich mehrere Antennen 4, 5 jeder Art vorgesehen sein, beispielsweise zwei Sendeantennen 4 und vier Empfangsantennen 5. Über die Sendeantennen 4 können Radarsignale ausgesendet werden, die über die ständig empfangsbereiten Empfangsantennen 5 wieder empfangen werden können. Zur entsprechenden Vorverarbeitung von Radarsignalen ist eine Elektronik 6 vorgesehen, die in der Steuereinrichtung 3 von einem digitalen Signalprozessor 7 entsprechend angesteuert und ausgelesen wird, Pfeil 8. Der digitale Signalprozessor 7 ist ferner dazu ausgebildet, empfangene Radarsignale bzw. Radardaten auszuwerten, vorliegend auch über die Bestimmung einer Geschwindigkeit, einer Entfernung und eines Winkels des über Radarechos detektierten Objekts hinausgehend im Sinne der Funktion eines Kollisionsvermeidungssystems. Dabei wird überprüft, vorliegend bereits im Radarsensor 1, ob eine kritische Verkehrssituation, insbesondere eine Kollisionsgefahr, vorliegt, beispielsweise durch Ermittlung einer Kollisionswahrscheinlichkeit.

Abhängig von bestimmten Kriterien, beispielsweise Kollisionswahrscheinlichkeitsschwellen, können Aktoren des Kraftfahrzeugs, in dem der Radarsensor 1 verbaut ist, angesteuert werden, wozu der Radarsensor 1 auch eine Schnittstelle 9 zu einem Bussystem des Kraftfahrzeugs aufweist. Derartige Funktionalitäten eines Radarsensors sind im Stand der Technik bereits weithin bekannt. Vorliegend ist der Radarsensor 1 jedoch so ausgestaltet, dass über die Antennenanordnung 2 auch Nachrichten einer Kraftfahrzeug-zu-Kraftfahrzeug-Kommunikation ausgesendet und empfangen werden können.

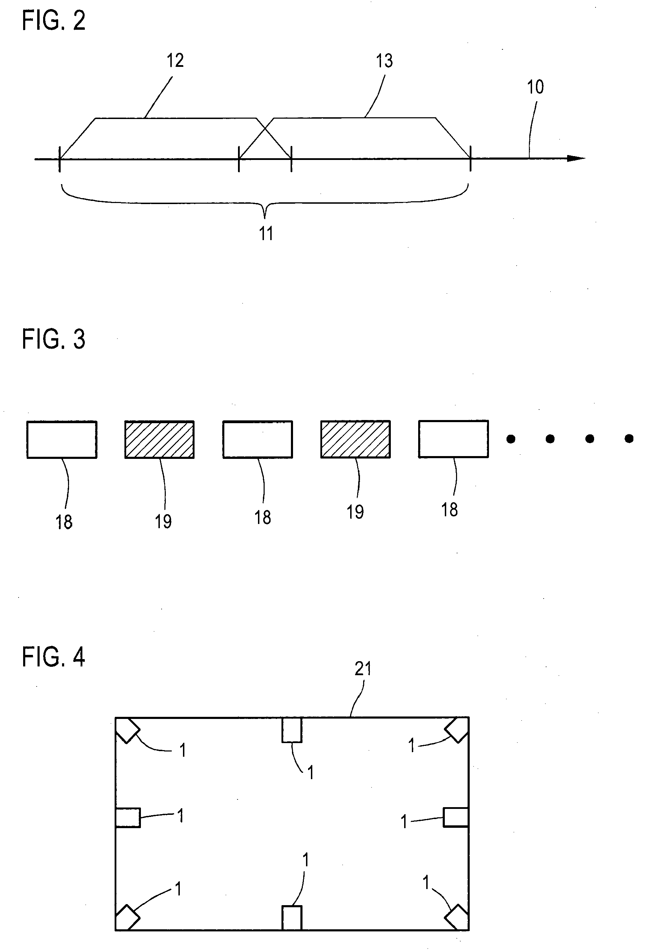

Hierzu ist die Antennenanordnung 2 als ein Patchantennen-Array ausgeführt, dessen Antennen 4, 5 eine Bandbreite von 195 MHz aufweisen und im Bereich von 5.725 MHz bis hin zu 5.920 MHz senden und empfangen können. In dieser Bandbreite sind nun Frequenzbänder für sowohl den Radarbetrieb als auch den Kraftfahrzeug-zu-Kraftfahrzeug-Kommunikationsbetrieb vorgesehen, was durch die Prinzipskizze der Fig. 2 näher erläutert wird. Dort ist auf einer Achse 10 die Frequenz aufgetragen, wobei der der Bandbreite entsprechende Frequenzbereich 11 deutlich hervorgehoben ist. Innerhalb des Frequenzbereichs 11 liegen nun das Radarfrequenzband 12, welches beispielsweise zwischen 5.725 MHz und 5.875 MHz liegen kann, und das Kommunikationsfrequenzband 13, welches zwischen 5.850 MHz und 5.920 MHz liegen kann, was einem bekannten Standard für die Kraftfahrzeug-zu-Kraftfahrzeug-Kommunikation entspricht. Die Frequenzbänder 12, 13 überlappen, wie ersichtlich, nur leicht.

Für den Empfangsfall, Empfangsantenne 5, ist es daher möglich, Filtereinheiten 14, 15 einzusetzen, um Nachrichten der Kraftfahrzeug-zu-Kraftfahrzeug-Kommunikation und Radarsignale (Radarechos) voneinander zu trennen. Während Radarsignale zur weiteren Verarbeitung der Elektronik 6 zugeführt werden, ist auch für die Aufbereitung der Nachrichten eine Elektronik 16 vorgesehen, der die entsprechend abgetrennten Nachrichten von der Filtereinheit 14 zugeleitet werden.

Der wenigstens einen Sendeantenne 4 zugeordnet ist eine Schalteinheit 17 vorgesehen, so dass ein zyklisch abwechselndes Senden von Radarsignalen und Nachrichten realisiert werden kann, beispielsweise jeweils mit Zeitfenstern von 50 ms. Dies ist schematisch in Fig. 3 dargestellt, wo ersichtlich ist, dass sich jeweils Zeitfenster 18 zum Senden von Radarsignalen mit Zeitfenstern 19 zum Senden von Nachrichten der Kraftfahrzeug-zu-Kraftfahrzeug-Kommunikation abwechseln.

Der digitale Signalprozessor 7 ist auch ausgebildet, den Sende- und Empfangsbetrieb der Nachrichten der Kraftfahrzeug-zu-Kraftfahrzeug-Kommunikation zu steuern, wie durch den Pfeil 20 angedeutet ist.

Die Doppelfunktionalität des Radarsensors 1 wird im vorliegenden Ausführungsbeispiel zweckmäßig genutzt, indem Auswertungsergebnisse der Radarsignale, also Auswertungsdaten, unmittelbar, das bedeutet, ohne weiteren Transport über den Fahrzeugbus oder weitere Verarbeitung in anderen Fahrzeugsystemen, als Teil einer Nachricht der Kraftfahrzeug-zu-Kraftfahrzeug-Kommunikation versendet werden können. Ein empfangendes Kraftfahrzeug kann die Auswertungsdaten mithin gezielt nutzen, was besonders zweckmäßig ist, wenn die Auswertungsdaten auch direkt von einem erfindungsgemäßen Radarsensor empfangen werden. Im Hinblick auf den Sendebetrieb ist die Steuereinrichtung 3 auch dazu ausgebildet, weitere Daten hinzuzufügen, vorliegend insbesondere Größenangaben des eigenen Kraftfahrzeugs betreffende Daten wie die Höhe, Breite und Länge des Kraftfahrzeugs, in dem der Radarsensor 1 verbaut ist.

Umgekehrt ist die Steuereinrichtung 3, insbesondere der digitale Signalprozessor 7, jedoch auch dazu ausgebildet, über Nachrichten empfangene Auswertungsdaten und weitere Daten bei der Auswertung von Radarsignalen zu berücksichtigen. So können beispielsweise empfangene Auswertungsdaten, die das Vorhandensein eines Objekts andeuten, zur schnelleren Plausibilisierung eines detektierten Objekts eingesetzt werden, und beispielsweise als weitere Daten übertragene Größenangaben können zur genaueren Beurteilung einer aktuellen Fahrsituation verwendet werden, nachdem derartige Informationen durch die Radarfunktionalität des Radarsensors 1 nicht gewonnen werden können.

Fig. 4 zeigt schließlich eine Prinzipskizze eines erfindungsgemäßen Kraftfahrzeugs 21, welches vorliegend ersichtlich eine Mehrzahl von Radarsensoren 1 enthält, die verschiedene Bereiche der Umgebung des Kraftfahrzeugs so abdecken, dass das gesamte Umfeld des Kraftfahrzeugs 21 abgedeckt wird, mithin eine 360°-Radarsicht gegeben ist. In einer solchen Ausgestaltung ist es zum einen möglich, auf eine dedizierte, nicht in einen Radarsensor 1 integrierte Kraftfahrzeug-zu-Kraftfahrzeug-Kommunikationseinrichtung gänzlich zu verzichten, zum anderen ist es aber auch möglich, Nachrichten an andere Verkehrsteilnehmer gezielt so auszusenden, dass eine gerichtete Übermittlung der Nachricht durch den geeigneten Radarsensor 1 in Richtung des angesprochenen Verkehrsteilnehmers erfolgt. Beschließt die Steuereinrichtung 3 eines Radarsensors 1 selbst, eine Nachricht an ein detektiertes Objekt zu senden, ist diese gerichtete Aussendung letztlich zwangsläufig gegeben; möglich ist es aber auch, dass andere Fahrzeugsysteme, die ein Aussenden von Nachrichten über die Kraftfahrzeug-zu-Kraftfahrzeug-Kommunikationsfunktion der Radarsensoren 1 wünschen, gezielt wenigstens einen der Radarsensoren 1 zur gerichteten Aussendung damit beauftragen.

## Patentansprüche

1. Radarsensor (1) für ein Kraftfahrzeug (21), umfassend wenigstens eine Antennenanordnung (2) zum Senden und Empfangen von Radarsignalen und eine zur Steuerung des Betriebs der Antennenanordnung (2) und zur Auswertung der empfangenen Radarsignale ausgebildete Steuereinrichtung (3), wobei die Antennenanordnung (2) durch die Steuereinrichtung (3) auch zum Senden und/oder Empfangen von Nachrichten im Rahmen einer Kraftfahrzeug-zu-Kraftfahrzeug-Kommunikation betreibbar ist, wobei die Antennenanordnung (2) wenigstens eine Sendeantenne (4) und wenigstens eine Empfangsantenne (5) aufweist, wobei die Sendeantenne (4) in zyklischem Wechsel mit dem Aussenden von Radarsignalen zum Aussenden von Nachrichten ansteuerbar ist,
**dadurch gekennzeichnet,**
**dass** die Antennenanordnung (2) zum Senden und/oder Empfangen in einem Frequenzbereich (11) ausgelegt ist, der ein Radarfrequenzband (12) und ein benachbartes und/oder teilweise überlappendes Kommunikationsfrequenzband (13) umfasst, wobei der Frequenzbereich (11) zwischen 5700 MHz und 6000 MHz liegt und/oder eine Überlappung zwischen dem Radarfrequenzband (12) und dem Kommunikationsfrequenzband (13) weniger als 20% der Breite des Radarfrequenzbandes (12) und/oder weniger als 40% der Breite des Kommunikationsfrequenzbandes (13) beträgt.

2. Radarsensor nach Anspruch 1,
**dadurch gekennzeichnet,**
**dass** die Steuereinrichtung (3) zum Senden von Auswertungsdaten wenigstens als Teil einer Nachricht ausgebildet ist.

3. Radarsensor nach Anspruch 2,
**dadurch gekennzeichnet,**
**dass** die Steuereinrichtung (3) zum insbesondere gezielten Senden von Auswertungsdaten und/oder weiteren Daten, insbesondere wenigstens eine Größenangabe des eigenen Kraftfahrzeugs (21) betreffenden Daten, an ein insbesondere durch den Radarsensor (1) detektiertes, von den Auswertungsdaten betroffenes weiteres Kraftfahrzeug ausgebildet ist.

4. Radarsensor nach einem der vorangehenden Ansprüche,
**dadurch gekennzeichnet,**
**dass** die Antennenanordnung (2) als ein Patchantennen-Array ausgebildet ist.

5. Radarsensor nach einem der vorangehenden Ansprüche,
**dadurch gekennzeichnet,**
**dass** der zum Empfang von Radarsignalen und Nachrichten ausgebildeten Empfangsantenne (5) wenigstens eine Filtereinheit (14, 15) zum Trennen von Radarsignalen und Nachrichten nachgeschaltet ist.

6. Radarsensor nach einem der vorangehenden Ansprüche,
**dadurch gekennzeichnet,**
**dass** die Steuereinrichtung (3) zur Berücksichtigung von über den Radarsensor (1) oder eine externe Kommunikationseinrichtung im Rahmen einer Nachricht empfangenen Auswertungsdaten und/oder weiteren Daten bei der Auswertung von Radarsignalen ausgebildet ist.

7. Kraftfahrzeug (21), aufweisen wenigstens einen Radarsensor (1) nach einem der vorangehenden Ansprüche.

8. Kraftfahrzeug nach Anspruch 7,
**dadurch gekennzeichnet,**
**dass** mehrere, das gesamte Umfeld des Kraftfahrzeugs (21) abdeckende Radarsensoren (1) vorgesehen sind.

9. Verfahren zur Kommunikation zwischen einem Kraftfahrzeug und wenigstens einem weiteren Verkehrsteilnehmer, wobei wenigstens eine Nachricht über wenigstens eine Antennenanordnung eines Radarsensors des Kraftfahrzeugs gesendet und/oder empfangen wird, wobei die Antennenanordnung (2) wenigstens eine Sendeantenne (4) und wenigstens eine Empfangsantenne (5) aufweist, wobei die Sendeantenne (4) in zyklischem Wechsel mit dem Aussenden von Radarsignalen zum Aussenden von Nachrichten angesteuert wird,
**dadurch gekennzeichnet,**
**dass** die Antennenanordnung (2) zum Senden und/oder Empfangen in einem Frequenzbereich (11) ausgelegt ist, der ein Radarfrequenzband (12) und ein benachbartes und/oder teilweise überlappendes Kommunikationsfrequenzband (13) umfasst, wobei der Frequenzbereich (11) zwischen 5700 MHz und 6000 MHz liegt und/oder eine Überlappung zwischen dem Radarfrequenzband (12) und dem Kommunikationsfrequenzband (13) weniger als 20% der Breite des Radarfrequenzbandes (12) und/oder weniger als 40% der Breite des Kommunikationsfrequenzbandes (13) beträgt.

## Claims

1. Radar sensor (1) for a motor vehicle (21), comprising at least one antenna arrangement (2) to transmit and receive radar signals and a control device (3) formed to control the operation of the antenna arrangement (2) and to evaluate the received radar signals, wherein the antenna arrangement (2) is also able to be operated by the control device (3) to transmit and/or receive messages in the scope of a vehicle-to-vehicle communication, wherein the antenna arrangement (2) has at least one transmitting antenna (4) and at least one receiving antenna (5), wherein the transmitting antenna (4) is able to be controlled to emit messages in cyclic alternation with the emission of radar signals,
**characterised in that**
the antenna arrangement (2) is designed to transmit and/or receive in a frequency range (11) which comprises a radar frequency band (12) and an adjacent and/or partially overlapping communication frequency band (13), wherein the frequency range (11) lies between 5700 MHz and 6000 MHz and/or an overlapping between the radar frequency band (12) and the communication frequency band (13) is less than 20% of the width of the radar frequency band (12) and/or less than 40% of the width of the communication frequency band (13).

2. Radar sensor according to Claim 1,
**characterised in that**
the control device (3) is formed to transmit evaluation data at least as a part of a message.

3. Radar sensor according to Claim 2,
**characterised in that**
the control device (3) is formed to in particular targetedly transmit evaluation data and/or further data, in particular at least one piece of data relating to a size indication of the particular motor vehicle (21), to a further motor vehicle which is in particular detected by the radar sensor (1) and affected by the evaluation data.

4. Radar sensor according to any one of the preceding claims,
**characterised in that**
the antenna arrangement (2) is formed as a patch antenna array.

5. Radar sensor according to any one of the preceding claims,
**characterised in that**
at least one filter unit (14, 15) to separate radar signals and messages is connected downstream of the receiving antenna (5) formed to receive radar signals and messages.

6. Radar sensor according to any one of the preceding claims,
**characterised in that**
the control device (3) is formed to take into account evaluation data received via the radar sensor (1) or an external communication device in the scope of a message and/or further data during the evaluation of radar signals.

7. Motor vehicle (21), having at least one radar sensor (1) according to any one of the preceding claims.

8. Motor vehicle according to Claim 7,
**characterised in that**
several radar sensors (1) covering the entire surrounding environment of the motor vehicle (21) are provided.

9. Method for communicating between a motor vehicle and at least one further road user, wherein at least one message is transmitted and/or received via at least one antenna arrangement of a radar sensor of the motor vehicle, wherein the antenna arrangement (2) has at least one transmitting antenna (4) and at least one receiving antenna (5), wherein the transmitting antenna (4) is controlled to emit messages in cyclic alternation with the emission of radar signals,
**characterised in that**
the antenna arrangement (2) is designed to transmit and/or receive in a frequency range (11) which comprises a radar frequency band (12) and an adjacent and/or partially overlapping communication frequency band (13), wherein the frequency range (11) lies between 5700 MHz and 6000MHz and/or an overlapping between the radar frequency band (12) and the communication frequency band (13) is less than 20% of the width of the radar frequency band (12) and/or less than 40% of the width of the communication frequency band (13).

## Revendications

1. Capteur radar (1) pour un véhicule automobile (21), comprenant au moins un dispositif d'antenne (2) pour émettre et recevoir des signaux radars et un dispositif de commande (3) conçu pour commander le fonctionnement du dispositif d'antenne (2) et pour évaluer les signaux radars reçus, le dispositif d'antenne (2) pouvant aussi être commandé par le dispositif de commande (3) pour émettre et/ou recevoir des messages dans le cadre d'une communication de véhicule à véhicule, le dispositif d'antenne (2) comportant au moins une antenne d'émission (4) et au moins une antenne de réception (5), l'antenne d'émission (4) pouvant être commandée pour émettre des messages en alternant de manière cyclique avec l'émission de signaux radars,
**caractérisé en ce que** le dispositif d'antenne (2) est conçu pour émettre et/ou recevoir dans une plage de fréquence (11) qui comprend une bande de fréquence de radar (12) et une bande de fréquence de communication (13) qui est voisine de celle-ci et/ou qui chevauche en partie celle-ci, la plage de fréquence (11) étant comprise entre 5700 MHz et 6000 MHz et/ou un chevauchement entre la bande de fréquence de radar (12) et la bande de fréquence de communication (13) étant inférieur à 20% de la largeur de la bande de fréquence de radar (12) et/ou inférieur à 40% de la largeur de la bande de fréquence de communication (13).

2. Capteur radar selon la revendication 1, **caractérisé en ce que** le dispositif de commande (3) est conçu pour émettre des données d'évaluation au moins comme partie d'un message.

3. Capteur radar selon la revendication 2, **caractérisé en ce que** le dispositif de commande (3) est conçu pour émettre notamment de manière ciblée des données d'évaluation et/ou d'autres données, notamment au moins des données concernant une indication de grandeur du véhicule automobile considéré (21), vers un autre véhicule automobile détecté notamment par le capteur radar (1) et concerné par les données d'évaluation.

4. Capteur radar selon l'une des revendications précédentes, **caractérisé en ce que** le dispositif d'antenne (2) est conçu comme un réseau d'antennes planaires.

5. Capteur radar selon l'une des revendications précédentes, **caractérisé en ce que**, en aval de l'antenne de réception (5) conçue pour recevoir des signaux radars et des messages, au moins une unité de filtrage (14, 15) est branchée pour séparer les signaux radars et les messages.

6. Capteur radar selon l'une des revendications précédentes, **caractérisé en ce que** le dispositif de commande (3) est conçu pour prendre en compte des données d'évaluation reçues dans le cadre d'un message par l'intermédiaire du capteur radar (1) ou d'un dispositif de communication externe et/ou d'autres données lors de l'évaluation de signaux radars.

7. Véhicule automobile (21), comportant au moins un capteur radar (1) selon l'une des revendications précédentes.

8. Véhicule automobile selon la revendication 7, **caractérisé en ce qu'**il est prévu plusieurs capteurs radars (1) qui couvrent tout l'environnement du véhicule automobile (21).

9. Procédé pour la communication entre un véhicule automobile et au moins un autre usager de la route, au moins un message étant émis et/ou reçu par l'intermédiaire d'au moins un dispositif d'antenne d'un capteur radar du véhicule automobile, le dispositif d'antenne (2) comportant au moins une antenne d'émission (4) et au moins une antenne de réception (5), l'antenne d'émission (4) étant commandée pour émettre des messages en alternant de manière cyclique avec l'émission de signaux radars,
**caractérisé en ce que** le dispositif d'antenne (2) est conçu pour émettre et/ou recevoir dans une plage de fréquence (11) qui comprend une bande de fréquence de radar (12) et une bande de fréquence de communication (13) qui est voisine de celle-ci et/ou qui chevauche en partie celle-ci, la plage de fréquence (11) étant comprise entre 5700 MHz et 6000 MHz et/ou un chevauchement entre la bande de fréquence de radar (12) et la bande de fréquence de communication (13) étant inférieur à 20% de la largeur de la bande de fréquence de radar (12) et/ou inférieur à 40% de la largeur de la bande de fréquence de communication (13).
